# EUROPEAN PATENT SPECIFICATION

(11) **EP 1 383 350 B1**
(45) Date of publication and mention of the grant of the patent: **18.10.2006**
(21) Application number: 02016132.9
(22) Date of filing: 19.07.2002
(51) Int. Cl.: H04Q 7/34, H04L 12/26

(54) **Apparatus and method for communication monitoring in a mobile radio network**
Einrichtung und Verfahren zur Kommunikations-Überwachung in einem mobilen Funknetz
Dispositif et méthode pour surveillance de communication dans un réseau radio mobile

(43) Date of publication of application: 21.01.2004
(73) Proprietor: Tektronix International Sales GmbH, 8201 Schaffhausen (CH)
(72) Inventor: Bovo, Antonio, 35127 Padova (IT); Alessio, Biasutto, 30172 Mestre (Venezia) (IT); Fioravanti, Michele, 30033 Noale (Venezia) (IT)
(74) Representative: Schurack, Eduard F.

(56) References cited:
- "Monitoring System NET- 7" TEKTRONIX, [Online] 2001, page 1-4 XP002225043 Retrieved from the Internet: <URL:www.tektronix.com> [retrieved on 2002-12-16]
- "Managing Quality of Service, Security, Roaming Scenarios and Charging Functions in the New GPRS Packet-Switched Domain" TEKTRONIX, [Online] 30 October 2001 (2001-10-30), pages 1-16, XP002225044 Retrieved from the Internet: <URL:www.tektronix.com/mobile> [retrieved on 2002-12-16]

## Description

The present invention relates to an apparatus and a method for communication monitoring in a mobile radio network, in which the data is transferred in the form of data packets, in which each mobile radio subscriber is allocated to a radio access entity which can exchange data with said subscriber via radio, which allocation may change with the movement of a mobile radio subscriber, each said radio access entity being connected to a serving switching entity via a first link, each said serving switching entity exchanging data between plural radio access entities allocated to it or with a higher instance to which plural serving switching entities are allocated, each said serving switching entity being connected to a subscriber data base entity via a second link, said subscriber data base entity containing subscriber-oriented data of the mobile radio subscribers allocated to it, said data exchanged between a radio access entity and the serving switching entity allocated to it being ciphered data, whereby at least first and second ciphering parameters are used for ciphering a first link, which first ciphering parameter is provided by said subscriber data base entity and which second ciphering parameter is obtained, especially recovered dynamically, from the data exchange between said radio access entity and said serving switching entity allocated to it.

For a better understanding of the present invention, the latter is described hereinafter using the example of a GPRS (General Packet Radio Service) network. However, the invention may readily be used with other standards covered by the claimed apparatus or the claimed method, for instance UMTS (Universal Mobile Telecommunication System). Furthermore, if the invention is adapted further appropriately, it may also be applied to standards involving more than two ciphering parameters, as will be evident to the person of skill in the art. Merely for the purpose of more detailed information, it is to be noted that said data transmitted in said mobile radio network includes useful data as well as signalling data.

Under the GPRS standard, said serving switching entity will be an SGSN (Serving GPRS Support Node), said first link will be a Gb interface, said second link will be a Gr interface, said radio access entity will be a BSS (base station subsystem) and said subscriber entity will be an HLR (home location register).

A generic apparatus which can be used for performing a generic method is distributed by the applicants of the present application under the trade name Tektronix K1205. Said K1205 is a portable stand-alone device which operates as a probe connected to a line, as it were, with deciphering taking place within a monitoring application for which this device can be configured specifically. All required Gb and Gr interfaces need to be connected directly to said K1205, for which purpose 16 connections in total are available. No cooperation and especially no exchange of deciphering parameters with other K1205 devices is possible. Any processing following deciphering, for example compiling statistics and call traces, is done directly within said device, since the deciphered data cannot be forwarded on-line. However, off-line processing, i.e. processing which is not in real time, by means of recording files is possible.

Other Tektronix monitoring systems have been presented on the Tektronix homepage, see in particular "Monitoring System NET-7" TEKTRONIX, 2001, page 1-4, and "Managing Quality of Service, Security, Roaming Scenarios and Charging Functions in the New GPRS Packet-Switched Domain" TEKTRONIX, 2001, pages 1-16,

Consequently, while said K1205 may be used for monitoring the communication of selected mobile radio subscribers, it does not allow any real time monitoring of an SGSN or of a complete mobile radio network.

Therefore, it is the object of the present invention to improve on a generic apparatus and a generic method in such a manner that enhanced communication monitoring in a mobile radio network will be possible. Preferably, the improvement is to be such that preferred embodiments of the invention will allow the monitoring of a complete mobile radio network.

This object is achieved by an apparatus having the features of claim 1 and by a method having the features of claim 11.

The above objects could not be achieved even if several K1205 devices were used: First of all, a K1205 is not suited for cooperation with other devices. Now, if a K1205 were to be expanded, i.e. from 16 connections to a random number of connections, this would still only allow monitoring at a fixed position, for example at an SGSN, since the individual components of a K1205 cannot be operated separately. Cooperation with K1205 devices located at other SGSNs for example, is thus impossible. If the data from individual K1205s were collected - especially in an ciphered form, for lack of ciphering parameters - and were forwarded to some point, this would no longer allow any real time monitoring. Monitoring becomes virtually impossible when a mobile radio subscriber moves from the service area of a first SGSN into the service area of a second SGSN. Since said second SGSN does not have any information on the deciphering parameters transferred during connection set-up (which information would reside with the first SGSN), said second SGSN would not be able to decipher any data.

For this reason, the present invention is taking an altogether different approach: It is based on the realization that the ideal solution to the problem is the use of a distributed monitoring system instead of a stand-alone device. An intelligent distribution of the functionalities will allow a plurality of components to cooperate, which in turn makes it possible to monitor even a complete mobile radio network in real time. The deciphering architecture according to the invention provides a non-intrusive monitoring system which is able to manage the deciphering process automatically. This allows a protocol analysis or procedure trace to be performed also on ciphered packets.

The following is a description of the components to be located at an SGSN, which components may also cooperate with corresponding components of other SGSNs via appropriate connections, for example an LAN (Local Area Network) or a WAN (Wide Area Network). Various other constellations may be useful, depending on the application purpose, of which a few are to be described as examples below: It is possible for example to have the processing devices of plural SGSNs cooperate with a deciphering parameter providing device and a deciphered data providing device. It is likewise deemed within the scope of the present invention to have said processing devices of an SGSN transfer their deciphering parameters or deciphered data not only to the deciphering parameter providing device allocated to the corresponding SGSN and to said deciphered data providing device, but also to a predeterminable number of neighbouring SGSNs into whose service area the mobile radio subscriber might move when changing his position.

Said at least one processing device is coupled to said at least one deciphering parameter providing device as well as to said at least one deciphered data providing device, preferably via an LAN or a WAN. Especially in GPRS applications, the data on said first links (26) is ciphered by means of a third ciphering parameter each, said third ciphering parameter being especially a sequence number of a transmitted data packet, said at least one processing device being designed to determine the third ciphering parameter and to use it for deciphering the data transferred on the respective first link.

Preferably, each processing device includes a device for delaying the forwarding of selected data packets, in particular in such a manner that an ordered data flow of data packets can be provided at the output of a processing device, regardless of whether or not a data packet had been ciphered. Simply put, a ciphered data flow thus enters a processing device and exits the latter again in deciphered form, which allows the original order to be maintained. This is advantageous especially in view of the vast number of possible post-processing procedures and evaluations. It is of course possible to implement filter functions in a processing device which can then be applied to the data flow of unciphered and deciphered data packets.

With respect to real-time applications, it has turned out to be particularly advantageous if each processing device comprises a first memory, especially a cache, in which the deciphering parameters provided by said deciphering parameter providing device can be stored. This helps avoid repeated queries for the current deciphering parameters to said deciphering parameter providing device for the same mobile radio subscriber. To allow particularly fast access times, the memory should be kept small, and it is preferred in this context to design the memory in such a manner that the oldest entries are overwritten by the most recent entries.

Particularly good results were obtained by having plural processing devices cooperate in parallel with allocated deciphering parameter providing devices and allocated deciphered data providing devices, the number of said processing devices having been chosen so as to cover all first and second links allocated to at least one serving switching entity. Particular mention is to be made here of an implementation in which plural processing devices, one deciphering parameter providing device and one deciphered data providing device have cooperated for one serving switching entity. Subdividing the monitoring apparatus of the invention into units per serving switching entity allows a well-arranged and clear configuration and thus a simple structure.

Preferably, said processing devices are located with said SGSNs, said deciphering parameter providing device for example centrally between plural SGSNs for which it is responsible and said deciphered data providing device near devices which may be used for the further processing of the deciphered data flow.

In the method of the invention, a processing device first of all checks whether or not an incoming data package is ciphered. If said data packet is found to be unciphered, said data packet will be time delayed, to be combined with as yet ciphered data packets once these have been deciphered, to give an ordered data flow. If said data packet is found to be ciphered, it will undergo a deciphering process.

The corresponding at least first and second ciphering parameters for a data packet are preferably retrieved using an allocation parameter which can be derived from said data packet. In the case of GPRS systems, this will especially be the TLLI/RAI information. A ciphering/deciphering parameter may also be understood to be plural ciphering/deciphering parameters, whereby it is important for the ciphering implementations that they are provided on the corresponding link. In a GPRS for example, the parameters IOV, Kc, OC (see the GSM 04.64 specification) used for ciphering are referred to as ciphering parameters allocated to the first and second links, i.e. as a triple which can change after switch on of the mobile handset or after a renewed attach (i.e. Kc parameter) or can be upgraded dynamically with the traffic transferred by the mobile (i.e.OC parameter). Renewed attach means that a GPRS subscriber can always be on-line since charging will only be according to data volume. The aforementioned triples are transferred in an unciphered form, whereby the processing device is preferably designed so as to determine the current at least first and second ciphering parameters from the data packets incoming from the respectively connected first and/or second links and to forward them to an allocated deciphering parameter providing device for storage as deciphering parameters. There, they will then be available to other processing devices, in particular also to those which are allocated to a different SGSN and may be retrieved once the mobile radio subscriber enters their service area. Corresponding processing devices are thus also capable of deciphering data from mobile radio subscribers that only entered their service area in the course of a communication.

To prevent the actual processing device from having to retrieve, from the deciphering parameter providing device, the current deciphering parameters for mobile radio subscribers that have initiated a communication in the service area of said processing unit, each processing device preferably also stores in its own memory the at least first and second deciphering parameters it has determined or previously queried to the deciphering parameter providing device. For minimizing the number of queries to an allocated deciphering parameter providing device, it is further preferred that each processing device should store in its own memory at least first and second deciphering parameters retrieved from such an allocated deciphering parameter providing device.

To be consistent, in the process of deciphering data packets, each processing device will first of all check whether or not the required at least first and second deciphering parameters can be retrieved from its own memory, and only if not, will retrieve such parameters from an allocated deciphering parameter providing device. It remains to be said that the third deciphering parameter that - as noted above, may for example be based on the sequence number of a data packet transferred - may be readily determined by a processing device itself and thus need not be retrieved from any other device.

Finally, it is preferred to design the components of the apparatus of the invention in such a manner that the data can be deciphered and forwarded in real time. In a preferred implementation the processing devices were implemented as PowerWan^{™} boards, and the deciphering parameter providing device as a Sun^{™} UNIX^{™} server.

Further advantageous embodiments may be gathered from the subclaims.

The following is a description of a particularly preferred embodiment in which reference is made to the accompanying drawings, of which:
- FIGURE 1: is a diagrammatic view of an apparatus of the invention which is connected to an exemplary mobile radio network; and
- FIGURE 2: is a schematic block diagram view showing the signal flow graph for an embodiment of the method according to the invention.

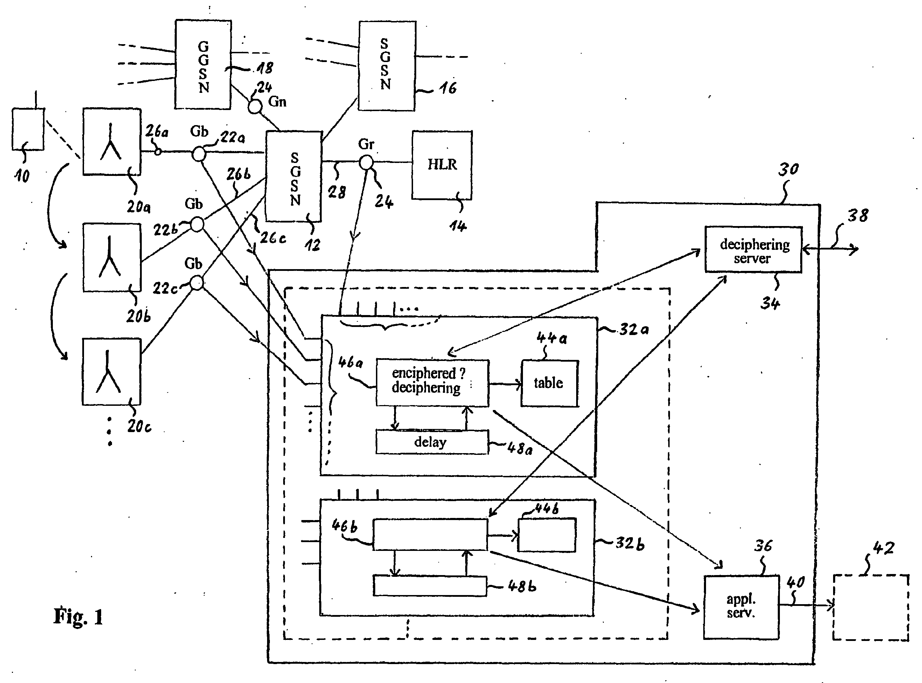

In the following, an apparatus of the invention and/or a method of the invention is described using the example of a GPRS network. However, it may readily be adapted to other network standards such as UMTS. FIG. 1 first of all shows parts of a GPRS mobile radio network in which there is a wireless connection between an mobile handset (MRS, mobile radio subscriber) 10 and a BSS 20a. Said BSS 20a is connected to an SGSN 12 via a Gb interface 22a. Said SGSN 12 in turn is connected to an HLR 14, via a Gr interface 24. On the other hand, said SGSN 12 also has connections to other SGSNs, of which one example, SGSN 16, is shown. Via a Gn interface 24, said SGSN 12 is also connected to a superior GGSN (Gateway GPRS Service Node) 18. By changing his position, said MRS 10 enters the service area of different BSSs, as illustrated by arrows, in the present case moving from the service area of BSS 20a into the service area of BSS 20b and from there into the service area of BSS 20c. BSS 20b and BSS 20c are connected to SGSN 12 via Gb interfaces 22b, 22c, respectively. The connections between SGSN 12 and each BSS 20a to 20c are referred to as first links 26a to 26c. The connection between the SGSN 12 and an HLR is termed second link 28.

After switching on the mobile handset 10 or after a renewed attach, plural ciphering parameters are retrieved from the HLR 14 and transferred to the SGSN 12. In the present case, these are the parameters "Kc ciphering key" plus other parameters as the "ciphering key sequence number" and the "random parameter RAND". Other parameters involved are the IOV (input offset value) that is a random value generated by the SGSN and transferred to the mobile handset 10 and the OC (offset counter) that depends on the sequence number of the transferred packets (it's an offset based on the number of LLC (logical link control) window exceeding). The IOV is transferred to the mobile handset by the SGSN. Further details may be gathered from the GSM 04.64 specification.

At the end, the ciphering parameters for one packet are the Kc and a further ciphering parameter that is determined combining the IOV, OC and the ordering number of each LLC (logical link control) packet, transferred between SGSN and mobile handset. These ciphering parameters are used for ciphering the data packets transferred on the first link 26a to 26c. Both the ciphering parameters, i.e. those recovered from the LLC flow of data, and the first ciphering parameters, i.e. those provided by the HLR are changed dynamically during the communication.

An apparatus 30 of the invention substantially comprises three different types of components:

One or plural processing device(s) 32a, 32b, a deciphering server 34 as well as an application server 36. The different components 32a, 32b, 34, 36 need not all be at the same location, but can be disposed at random sites. In particular, different processing devices 32a, 32b may be located at the site of different SGSNs 12 for example. Intercommunication between the processing devices 32a, 32b on the one hand and the deciphering server 34 and the application server 36 on the other hand, as indicated by arrows, is preferably via an LAN or a WAN. However, for performance reasons it is preferred that the deciphering server 34 is located at the same site of the processing devices 32a and 32b, to communicate via LAN and not via WAN, considering the normal available bandwidth on a WAN. One deciphering server 34 can serve many different processing devices 32a and 32b communicating via LAN. The application server 36 can be remotely located, communicating via WAN to the different components. As indicated by arrow 38, the deciphering server 34 of the present deciphering device 30 may be connected to deciphering servers of other deciphering devices so as to have access to the deciphering parameters stored there. As indicated by arrow 40, the data of the application server 36 is provided to a further processing device 42.

In the present case, as many processing devices 32a, 32b as are required for connecting all Gb interfaces 22 as well as all Gr interfaces 24 of the respective SGSN 12 to processing devices 32, are disposed at the same location as the SGSN 12.

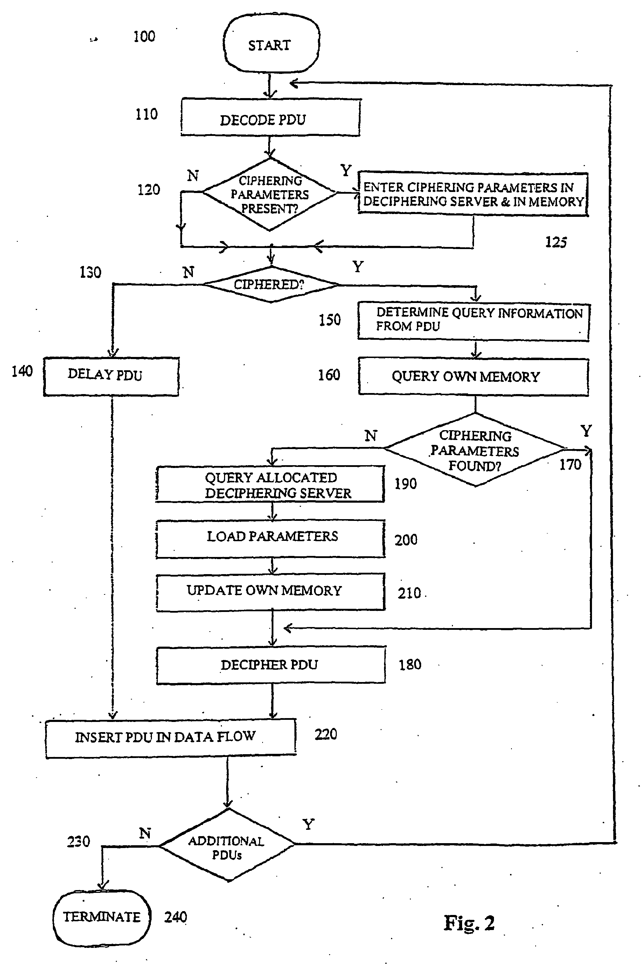

The further structure of the components 32, 34, 36 shall now be described in more detail with reference to the signal flow graph of FIG. 2. The method of the invention starts at step 100. First of all, a data packet PDU is input via the Gb or Gr interfaces 22, 24 connected to a processing device 32 and decoded, see step 110. In step 120 it is then checked whether ciphering parameters are also present. This is possible in particular where the PDU is part of a connection set-up or of a renewed attach. If ciphering parameters are present, such are forwarded as deciphering parameters to the deciphering server 34 in step 125 as well as stored in the memory 44 of the respective processing device 32. Subsequently, in step 130, the deciphering unit 46 associated with the respective processing device 32 checks whether or not such PDU is ciphered. If the PDU is found to be unciphered, it will be delayed in a delaying device 48 of the respective processing device 32 in step 140 for combination with deciphered PDUs later on to give an ordered data flow again. If the PDU is found to be ciphered, a keyword is determined in step 150, e.g. the TLLI/RAI information, in order to query the memory 44 of the processing device 32 in step 160 for deciphering parameters. If deciphering parameters are detected in step 170, these will be used in step 180 for deciphering the PDU, in particular by means of ETSI (European Telecommunication Standard Institute) deciphering algorithms, if necessary together with further deciphering information, e.g. the PDU sequence number, for deciphering said PDU. In the event that the deciphering parameters are not found in the memory 44 of the processing device 32 in step 170, the allocated deciphering server 34 will be queried in step 190. In step 200, the deciphering parameters will be loaded into the deciphering unit 46, and in step 210, the memory 44 of the processing device 32 will be updated to avoid repeated access to the associated deciphering server 34. In step 220, the PDUs transferred in an unciphered form and the deciphered PDUs will be combined to give a data flow and transferred to the allocated application server 36. It will then be checked in step 230 whether further PDUs are present on the inputs of the processing device 32. If so, the process will return to step 110, if not, the process will be terminated at step 240.

Additional embodiments and modifications are within the scope of the invention. It may for example be envisaged to delete the associated deciphering parameters in the deciphering server 34 once it is detected that a subscriber has terminated his connection, so as to thus minimize the time spent searching for deciphering parameters of other subscribers.

## Claims

1. An apparatus for communication monitoring in a mobile radio network, in which the data is transferred in the form of data packets (PDU), with each mobile radio subscriber (10) being allocated to a radio access entity (20) which can exchange data with said subscriber (10) via radio, which allocation may change with the movement of said subscriber (10), each said radio access entity (20) being connected to a serving switching entity (12) via a first link (26), each said serving switching entity (12) exchanging data between plural radio access entities allocated to it or with a higher instance (18) to which plural serving switching entities are allocated, each said serving switching entity (12) being connected to a subscriber database entity (14) via a second link (28), said subscriber database entity (14) containing subscriber-oriented data of the mobile radio subscribers allocated to it, said data exchanged between a radio access entity (20) and its allocated serving switching entity (12) being ciphered data, whereby at least first and second ciphering parameters are used for ciphering a first link (26), which first ciphering parameter is provided by said subscriber database entity (14) and which second ciphering parameter is obtained, expecially dynamically recovered, from the data exchange between said radio access entity (20) and its allocated serving switching entity (12), **characterized by**:
- at least one processing device (32) which is connected to the plurality of first links (26) and may be connected to a plurality of second links (28), each said processing device (32) being designed to determine, from the data transferred via the respectively connected first and second links (26; 28), the current at least first and second ciphering parameters, and to decipher the data on the first links (26) using the respective at least first and second deciphering parameters;
- at least one deciphering parameter providing device (34) connected and allocated to at least said processing device (32) in which the current at least first and second ciphering parameters can be filed as deciphering parameters by the at least one allocated processing device (32) and may be made available to it upon request by a processing device (32), in particular a processing device (32) other than the one which filed said at least first and second deciphering parameters in said deciphering parameter providing device (34);
- at least one deciphered data providing device (36) connected to at least said processing device (32) for providing at least a partial amount of said deciphered data,
wherein said at least one processing device (32), said at least one deciphering parameter providing device (34) and said at least one deciphered data providing device (36) can be located independently of the each other.

2. The apparatus of claim 1,
**characterized in that** said at least one processing device (32) is coupled to said at least one deciphering parameter providing device (34) as well as to said at least one deciphered data providing device (36) via an LAN or a WAN.

3. The apparatus of claims 1 or 2,
**characterized in that** the data on said first links (26) is ciphered by means of a third ciphering parameter each, said third deciphering parameter being especially a sequence number of a transmitted data packet, said at least one processing device (32) being designed to determine the third ciphering parameter and to use them for deciphering the data transferred via the respective first link (26).

4. The apparatus of one of the preceding claims,
**characterized in that** each processing device (32) comprises a device for delaying (48) the forwarding of selected data packets, in particular in such a manner that an ordered data flow of data packets can be provided at the output of a processing device (32), regardless of whether or not a data packet had been ciphered.

5. The apparatus of one of the preceding claims,
**characterized in that** each processing device (32) comprises a first memory (44), in particular a cache, in which the deciphering parameters provided by said deciphering parameter providing device (34) can be stored.

6. The apparatus of claim 5,
**characterized in that** in said first memory (44), the oldest entries are overwritten by the most recent entries.

7. The apparatus of one of the preceding claims,
**characterized in that** said data transmitted in said mobile radio network includes useful payload data and signalling data.

8. The apparatus of one of the preceding claims,
**characterized in that** said mobile radio network is of the General Packet Radio Service type, in which said serving switching entity (12) is a Serving General Packet Radio Service Support Node, said first link (26) is a Gb interface, said second link (28) is a Gr interface, said radio access entity (20) is a base station subsystem, said subscriber database entity (14) is a home location register.

9. The apparatus of one of the preceding claims,
**characterized in that** plural processing devices (32) cooperate in parallel with allocated deciphering parameter providing devices (34) and allocated deciphered data providing devices (36), the number of processing devices (32) being sufficient to cover all the first and second links (26; 28) allocated to at least one serving switching entity (12).

10. The apparatus of one of the preceding claims,
**characterized in that** for a serving switching entity (12), plural processing devices (32) and one deciphering parameter providing device (34) as well as one deciphered data providing device (36) cooperate.

11. A method for monitoring communication in a mobile radio network, in which the data is transferred in the form of data packets, with each mobile radio subscriber (10) being allocated to a radio access entity (20) which can exchange data with said mobile radio subscriber (10) via radio, which allocation may change with the movement of said subscriber (10), each said radio access entity (20) being connected to a serving switching entity (12) via a first link (26), each said serving switching entity (12) exchanging data between plural radio access entities allocated to it or with a higher instance (18) to which plural serving switching entities are allocated, each said serving switching entity (12) being connected to a subscriber database entity (14) via a second link (28), said subscriber database entity (14) containing subscriber-oriented data of the mobile radio subscribers allocated to it, said data exchanged between a radio access entity (20) and its allocated serving switching entity (12) being ciphered data, whereby at least first and second ciphering parameters are used for ciphering a first link (26), which first ciphering parameter is provided by said subscriber database entity (14) and which second ciphering parameter is obtained, especially dynamically recovered, from the data exchange between said radio access entity (20) and its allocated serving switching entity (12),
**characterized by** the following steps:
a) Arranging at least one processing device (32), at least one deciphering parameter providing device (34) as well as at least one deciphered data providing device (36) independently of each other at random sites;
b) establishing a connection between plural first and possibly plural second links (26; 28) on the one hand and at least one processing device (32) on the other.
c) establishing a connection between said at least one processing device (32) and at least one allocated deciphering parameter providing device (34) as well as between said at least one processing device (32) and at least one allocated deciphered data providing device (36);
d) retrieving, for the respective first link (26) to be deciphered, the associated at least first and second deciphering parameters from an allocated deciphering parameter providing device (34);
e) in the respective processing device (32): deciphering the data packets transferred via the corresponding first link (26) by means of at least said first and second deciphering parameters; and
f) forwarding at least a partial amount of the deciphered data to an allocated deciphered data providing device (36).

12. The method of claim 11,
**characterized in that** said processing device (32) will first of all check whether or not an incoming data packet is ciphered, whereby
- if said data packet is found to be unciphered, said data packet will be time delayed, so that it can be combined with as yet ciphered data packets after these have been deciphered, to give an ordered data flow;
- if said data packet is found to be ciphered, said data packet will undergo a deciphering process.

13. The method of claims 11 or 12,
**characterized in that** the respective at least first and second deciphering parameters for a data packet are queried using an allocation parameter which can be derived from said data packet.

14. The method of one of claims 11 to 13,
**characterized in that** each processing device (32) determines the current at least first ciphering parameters from the data packets received from the connected second links (28) and/or the current at least second ciphering parameters from the data packets received from the connected first links (26) and forwards them as deciphering parameters to an allocated deciphering parameter providing device (34) for storage.

15. The method of one of claims 11 to 14,
**characterized in that** each processing device (32) files at least first and second deciphering parameters queried from an allocated deciphering parameter providing device (34) in a memory (44) of the respective processing device (32).

16. The method of claim 15,
**characterized in that** for deciphering data packets, each processing device (32) will first of all check whether the required at least first and second deciphering parameters can be retrieved from its memory (44), and only if not, will query these from an allocated deciphering parameter providing device (34).

17. The method of one of claims 11 to 16,
**characterized in that** said data is deciphered and forwarded in real time.

## Patentansprüche

1. Vorrichtung zur Kommunikationsüberwachung in einem Mobilfunknetz, bei dem die Daten in Form von Datenpaketen (PDU) übertragen werden, wobei jeder Mobilfunkteilnehmer (10) einer Funkzugriffseinheit (20) zugeordnet ist, die per Funk Daten mit dem Mobilfunkteilnehmer (10) austauschen kann, wobei sich die Zuordnung durch Bewegung des Mobilfunkteilnehmers (10) ändern kann, wobei jede Funkzugriffseinheit (20) über einen ersten Link (26) mit einer Versorgungsschalteinheit (12) verbunden ist, wobei jede Versorgungsschalteinheit (12) Daten zwischen mehreren ihr zugeordneten Funkzugriffseinheiten oder mit einer höheren Instanz (18) austauscht, der mehrere Versorgungsschalteinheiten zugeordnet sind, wobei jede Versorgungsschalteinheit (12) über einen zweiten Link (28) mit einer Teilnehmerdatenbankeinheit (14) verbunden ist, wobei die Teilnehmerdatenbankeinheit (14) teilnehmerorientierte Daten der ihr zugeordneten Mobilfunkteilnehmer enthält, wobei die ausgetauschten Daten zwischen einer Funkzugriffseinheit (20) und der ihr zugeordneten Versorgungsschalteinheit (12) verschlüsselte Daten sind, wobei zur Verschlüsselung eines ersten Links (26) zumindest ein erster Verschlüsselungsparameter und ein zweiter Verschlüsselungsparameter verwendet werden, wobei der erste Verschlüsselungsparameter von der Teilnehmerdatenbankeinheit (14) bereitgestellt wird und der zweite Verschlüsselungsparameter insbesondere dynamisch gewonnen wird aus dem Datenaustausch zwischen der Funkzugriffseinheit (20) und der ihr zugeordneten Versorgungsschalteinheit (12), umfassend:
- mindestens ein Verarbeitungsgerät (32), das mit mehreren ersten (26) und/oder mehreren zweiten Links (28) verbunden werden kann, wobei jedes Verarbeitungsgerät (32) ausgelegt ist, aus den auf den jeweils angeschlossenen ersten und zweiten Links (26; 28) übertragenen Daten die aktuellen zumindest ersten und zweiten Verschlüsselungsparameter zu ermitteln, und unter Verwendung der jeweiligen mindestens ersten und zweiten Entschlüsselungsparameter die Daten auf ersten Links (26) zu entschlüsseln;
- mindestens einem Gerät (34) zur Bereitstellung des Entschlüsselungsparameters, das mit mindestens einem zugeordneten Verarbeitungsgerät (32) verbunden ist, in das die aktuellen zumindest ersten und zweiten Verschlüsselungsparameter von dem Verarbeitungsgerät (32) als Entschlüsselungsparameter abgelegt werden können und auf Anfrage durch ein Verarbeitungsgerät (32), insbesondere ein anderes als das Verarbeitungsgerät, das diese zumindest ersten und zweiten Verschlüsselungsparameter in dem Gerät (34) zur Bereitstellung des Entschlüsselungsparameters abgelegt hat, an diesen bereitgestellt werden können;
- mindestens ein Gerät (36) zur Bereitstellung der entschlüsselten Daten, das mit dem Verarbeitungsgerät (32) verbunden ist und auf dem zumindest eine Teilmenge der entschlüsselten Daten bereitgestellt werden können,
wobei das mindestens eine Verarbeitungsgerät (32), das mindestens eine Gerät (34) zur Bereitstellung der Entschlüsselungsparameter sowie das mindestens eine Gerät (36) zur Bereitstellung entschlüsselter Daten unabhängig voneinander angeordnet sein können.

2. Vorrichtung nach Anspruch 1,
**dadurch gekennzeichnet,**
**dass** das mindestens eine Verarbeitungsgerät (32) mit dem mindestens einen Gerät (34) zur Bereitstellung der Entschlüsselungsparameter sowie dem mindestens einen Gerät (36) zur Bereitstellung entschlüsselter Daten über ein LAN oder ein WAN gekoppelt ist.

3. Vorrichtung nach Anspruch 1 oder 2,
**dadurch gekennzeichnet,**
**dass** die Daten auf den ersten Links (26) durch Verwendung jeweils eines dritten Verschlüsselungsparameters verschlüsselt werden, wobei der dritte Verschlüsselungsparameter insbesondere eine Abfolgenummer eines übertragenen Datenpaketes ist, wobei das mindestens eine Verarbeitungsgerät (32) ausgelegt ist, um den dritten Verschlüsselungsparameter zu bestimmen und für die Entschlüsselung der über den jeweiligen ersten Link (26) übertragenen Daten zu verwenden.

4. Vorrichtung nach einem der vorhergehenden Ansprüche,
**dadurch gekennzeichnet,**
**dass** jedes Verarbeitungsgerät (32) eine Vorrichtung (48) zum Verzögern der Weiterleitung ausgewählter Datenpakete umfasst, insbesondere derart, dass am Ausgang eines Verarbeitungsgerätes (32) ein Datenstrom von Datenpaketen sortiert bereitstellbar ist, unabhängig davon, ob ein Datenpaket verschlüsselt war oder nicht.

5. Vorrichtung nach einem der vorhergehenden Ansprüche,
**dadurch gekennzeichnet,**
**dass** jedes Verarbeitungsgerät (32) eine erste Speichervorrichtung (44), insbesondere einen Cache, umfaßt, in die die von dem Gerät (34) zur Bereitstellung der Entschlüsselungsparameter bereitgestellten Entschlüsselungsparameter speicherbar sind.

6. Vorrichtung nach Anspruch 5,
**dadurch gekennzeichnet,**
**dass** in der ersten Speichervorrichtung (44) die ältesten Einträge von den jüngsten Einträgen überschrieben werden.

7. Vorrichtung nach einem der vorhergehenden Ansprüche,
**dadurch gekennzeichnet,**
**dass** die übertragenen Daten im Mobilfunknetz Nutzdaten und Signaldaten umfassen.

8. Vorrichtung nach einem der vorhergehenden Ansprüche,
**dadurch gekennzeichnet,**
**dass** das Mobilfunknetz vom Typ eines General Packet Radio Services Netzwerk ist, wobei die Versorgungsschalteinheit (12) ein Knoten zur Versorgung mit und Unterstützung durch allgemeine Funkpakete ist, der erste Link (26) eine Gb-Schnittstelle, der zweite Link (28) eine Gr-Schnittstelle, die Funkzugriffseinheit (20) ein Basisstation-Untersystem ist, die Teilnehmerdatenbankeinheit (14) ein Homelocation-Register ist.

9. Vorrichtung nach einem der vorhergehenden Ansprüche,
**dadurch gekennzeichnet,**
**dass** mehrere Verarbeitungsgeräte (32) in parallel mit zugeordneten Geräten (34) zur Bereitstellung von Entschlüsselungsparametern und zugeordneten Geräten (36) zur Bereitstellung von entschlüsselten Daten zusammenwirken, wobei die Anzahl der Verarbeitungsgeräte (32) ausreicht, um alle ersten und zweiten Links (26; 28), die mindestens einer Versorgungsschalteinheit (12) zugeordnet sind, zu erfassen.

10. Vorrichtung nach einem der vorhergehenden Ansprüche,
**dadurch gekennzeichnet,**
**dass** für eine Versorgungsschalteinheit (12) mehrere Verarbeitungsgeräte (32) und ein Gerät (34) zur Bereitstellung von Entschlüsselungparametern und ein Gerät (36) zur Bereitstellung von entschlüsselten Daten zusammenwirken.

11. Verfahren zur Kommunikationsüberwachung in einem Mobilfunknetz, bei dem die Daten in Form von Datenpaketen übertragen werden, wobei jeder Mobilfunkteilnehmer (10) einer Funkzugriffseinheit (20) zugeordnet ist, die per Funk Daten mit dem Mobilfunkteilnehmer (10) austauschen kann, wobei sich die Zuordnung durch Bewegung des Mobilfunkteilnehmers (10) ändern kann, wobei jede Funkzugriffseinheit (20) über einen ersten Link (26) mit einer Versorgungsschalteinheit (12) verbunden ist, wobei jede Versorgungsschalteinheit (12) Daten zwischen mehreren ihr zugeordneten Funkzugriffseinheiten oder mit einer höheren Instanz (18) austauscht, der mehrere Versorgungsschalteinheiten zugeordnet sind, wobei jede Versorgungschalteinheit (12) über einen zweiten Link (28) mit einer Teilnehmerdatenbankeinheit (14) verbunden ist, wobei die Teilnehmerdatenbankeinheit (14) teilnehmerorientierte Daten der ihr zugeordneten Mobilfunkteilnehmer enthält, wobei die zwischen einer Funkzugriffseinheit (20) und der ihr zugeordneten Versorgungsschalteinheit (12) ausgetauschten Daten verschlüsselt sind, wobei zur Verschlüsselung des ersten Links (26) ein erster Verschlüsselungsparameter und ein zweiter Verschlüsselungsparameter verwendet werden, wobei der erste Verschlüsselungsparameter von der Teilnehmerdatenbankeinheit (14) bereitgestellt wird und der zweite Verschlüsselungsparameter insbesondere dynamisch gewonnen wird aus dem Datenaustausch zwischen der Funkzugriffseinheit (20) und der ihr zugeordneten Versorgungsschalteinheit (12), folgende Schritte umfassend:
a) Anordnen mindestens eines Verarbeitungsgerätes (32), mindestens eines Gerätes (34) zur Bereitstellung von Entschlüsselungsparametern sowie mindestens eines Gerätes (36) zur Bereitstellung entschlüsselter Daten unabhängig voneinander an beliebigen Orten;
b) Einrichten einer Verbindung zwischen mehreren ersten und/oder zweiten Links (26; 28) mit mindestens einem Verarbeitungsgerät (32);
c) Einrichten einer Verbindung zwischen dem mindestens einen Verarbeitungsgerät (32) und mindestens einem zugeordneten Gerät (34) zur Bereitstellung von entschlüsselten Daten sowie dem mindestens einen Verarbeitungsgerät (32) und mindestens einem zugeordneten Gerät (36) zur Bereitstellung von entschlüsselten Daten;
d) Abfragen, für den jeweiligen zu entschlüsselnden ersten Link (26), der zugehörigen zumindest ersten und zweiten Verschlüsselungsparameter aus einem zugeordneten Gerät (34) zur Bereitstellung von Entschlüsselungsparametern;
e) in dem jeweiligen Verarbeitungsgerät (32): Entschlüsseln der über den entsprechenden ersten Link (26) übertragenen Datenpakete unter Verwendung zumindest des ersten und zweiten Verschlüsselungsparameters; und
f) Weiterleiten zumindest einer Teilmenge der entschlüsselten Daten an ein zugeordnetes Gerät (36) zur Bereitstellung von entschlüsselten Daten.

12. Verfahren nach Anspruch 11,
**dadurch gekennzeichnet,**
**dass** das Verarbeitungsgerät (32) zunächst prüft, ob ein eingehendes Datenpaket verschlüsselt ist oder nicht, wobei
- wenn das Datenpaket für nicht verschlüsselt befunden wird, das Datenpaket zeitlich verzögert wird, um mit Datenpaketen, die zu entschlüsseln sind, nach deren Entschlüsselung zu einem sortierten Datenstrom zusammengesetzt zu werden;
- wenn das Datenpaket verschlüsselt ist, das Datenpaket entschlüsselt wird.

13. Verfahren nach Anspruch 11 oder 12,
**dadurch gekennzeichnet,**
**dass** die Abfrage der entsprechenden mindestens ersten und zweiten Verschlüsselungsparameter zu einem Datenpaket unter Verwendung eines aus dem Datenpaket ableitbaren Zuordnungsparameters erfolgt.

14. Verfahren nach einem der Ansprüche 11 bis 13,
**dadurch gekennzeichnet,**
**dass** jedes Verarbeitungsgerät (32) die aktuellen zumindest ersten Verschlüsselungsparameter aus den von den jeweils angeschlossenen zweiten Links (28) empfangenen Datenpaketen und/oder die aktuellen mindestens zweiten Verschlüsselungsparameter aus den von den angeschlossenen ersten Links (26) empfangenen Datenpaketen bestimmt und diese als Entschlüsselungsparameter zur Speicherung an ein zugeordnetes Gerät (34) zur Bereitstellung von Entschlüsselungsparametern weiterleitet.

15. Verfahren nach einem der Ansprüche 11 bis 14,
**dadurch gekennzeichnet,**
**dass** jedes Verarbeitungsgerät (32) aus einem zugeordneten Gerät (34) zur Bereitstellung von Entschlüsselungsparametern abgefragte zumindest erste und zweite Verschlüsselungsparameter in einer Speichervorrichtung (44) des jeweiligen Verarbeitungsgerätes (32) ablegt.

16. Verfahren nach Anspruch 15,
**dadurch gekennzeichnet,**
**dass** jedes Verarbeitungsgerät (32) bei der Durchführung einer Entschlüsselung von Datenpaketen zunächst prüft, ob die benötigten zumindest ersten und zweiten Verschlüsselungsparameter in seiner Speichervorrichtung (44) abfragbar sind und nur, falls dies nicht der Fall ist, diese von einem zugeordneten Gerät (34) zur Bereitstellung von Entschlüsselungsparametern abfragt.

17. Verfahren nach einem der Ansprüche 11 bis 16,
**dadurch gekennzeichnet,**
**dass** die Entschlüsselung und Weiterleitung der Daten in Echtzeit erfolgt.

## Revendications

1. Appareil de surveillance de communication dans un réseau radio mobile, dans lequel les données sont transférées sous forme de paquets de données (PDU), à chaque abonné au réseau radio mobile (10) étant allouée une entité d'accès radio (20) pouvant échanger par radio des données avec ledit abonné (10), ladite allocation pouvant changer selon le déplacement dudit abonné (10), chaque dite entité d'accès radio (20) étant connectée à une entité de commutation de rattachement (12) par une première liaison (26), chaque dite entité de commutation de rattachement (12) échangeant des données entre de multiples entités d'accès radio qui lui sont allouées ou avec une instance supérieure (18) à laquelle de multiples entités de commutation de rattachement sont allouées, chaque dite entité de commutation de rattachement (12) étant connectée une entité de base de données d'abonnées (14) par une deuxième liaison (28), ladite entité de base de données d'abonnées (14) contenant des données orientées abonnées sur les abonnées radio mobile qui lui sont alloués, lesdites données échangées entre une entité d'accès radio (20) et son entité de commutation de rattachement (12) allouée étant des données chiffrées, au moins un premier et un deuxième paramètre de chiffrage étant utilisés pour chiffrer une première liaison (26), ledit premier paramètre de chiffrage étant fourni par ladite entité de base de données d'abonnées (14) et ledit deuxième paramètre de chiffrage étant obtenu, en particulier récupéré dynamiquement, à partir de l'échange de données entre ladite entité d'accès radio (20) et son entité de commutation de rattachement (12) allouée, **caractérisé par** :
- au moins un dispositif de traitement (32) qui est connecté à la pluralité de premières liaisons (26) et qui peut être connecté à une pluralité de deuxièmes liaisons (28), chaque dit dispositif de traitement (32) étant conçu pour déterminer, à partir des données transférées par les premières et deuxièmes liaisons (26 ; 28) respectivement connectées, les au moins premiers et deuxièmes paramètres courants de chiffrage et pour déchiffrer les données des premières liaisons (26) en utilisant les au moins premiers et deuxièmes paramètres de déchiffrage ;
- au moins un dispositif fournisseur de paramètre de déchiffrage (34) connecté et alloué au moins au dit dispositif de traitement (32) dans lequel les au moins premiers et deuxièmes paramètres courants de chiffrage peuvent être inscrits en tant que paramètres de déchiffrage par le au moins un dispositif de traitement (32) alloué et peut lui être rendu disponible sur requête par un dispositif de traitement (32), en particulier un dispositif de traitement (32) différent de celui qui a inscrit lesdits au moins premiers et deuxièmes paramètres de déchiffrage dans ledit dispositif fournisseur de paramètre de déchiffrage (34);
- au moins un dispositif fournisseur de données déchiffrées (36) connecté au moins au dit dispositif de traitement (32) pour fournir au moins une quantité partielle desdites données déchiffrées,
où ledit au moins un dispositif de traitement (32), ledit au moins un dispositif fournisseur de paramètre de déchiffrage (34) et ledit au moins un dispositif fournisseur de données déchiffrées (36) peuvent être disposés indépendamment les uns des autres.

2. Appareil selon la revendication 1,
**caractérisé en ce que** ledit au moins un dispositif de traitement (32) est couplé audit au moins un dispositif fournisseur de paramètre de déchiffrage (34) ainsi qu'au dit au moins un dispositif fournisseur de données déchiffrées (36) au travers d'un réseau local ou d'un réseau longue distance.

3. Appareil selon les revendications 1 ou 2,
**caractérisé en ce que** les données desdites premières liaisons (26) sont chacune chiffrées au moyen d'un troisième paramètre de chiffrage, ledit troisième paramètre de déchiffrage étant en particulier un numéro de séquence d'un paquet de données transmis, ledit au moins un dispositif de traitement (32) étant conçu pour déterminer le troisième paramètre de chiffrage et les utiliser pour déchiffrer les données transférées par la première liaison (26) respective.

4. Appareil selon l'une quelconque des revendications précédentes,
**caractérisé en ce que** chaque dispositif de traitement (32) comprend un dispositif pour retarder (48) la transmission des paquets de données sélectionnés, en particulier de manière telle qu'un flux de données ordonnées de paquets de données sélectionnés peut être fourni à la sortie d'un dispositif de traitement (32), sans tenir compte de ce qu'un paquet a ou non été chiffré.

5. Appareil selon l'une quelconque des revendications précédentes,
**caractérisé en ce que** chaque dispositif de traitement (32) comprend une première mémoire (44), en particulier un cache, dans lequel peuvent être stockés les paramètres de déchiffrage fournis par ledit dispositif fournisseur de paramètre de déchiffrage (34).

6. Appareil selon la revendication 5,
**caractérisé en ce que** les entrées les plus anciennes sont écrasées par les entrées les plus récentes dans ladite première mémoire (44).

7. Appareil selon l'une quelconque des revendications précédentes,
**caractérisé en ce que** lesdites données transmises dans ledit réseau radio mobile incluent des données utiles et des données de signalisation.

8. Appareil selon l'une quelconque des revendications précédentes,
**caractérisé en ce que** ledit réseau radio mobile est du type General Packet Radio Service (GPRS, service général de radiocommunication en mode paquet), dans lequel ladite entité de commutation de rattachement (12) est un Serving General Packet Radio Service Support Node (noeud de support GPRS de service), ladite première liaison (26) est une interface Gb, ladite deuxième liaison (28) est une interface Gr, ladite entité d'accès radio (20) est un sous-système station de base et ladite entité de base de données d'abonnées (14) est un home location register (registre des positions de rattachement).

9. Appareil selon l'une quelconque des revendications précédentes,
**caractérisé en ce que** les multiples dispositifs de traitement (32) coopèrent en parallèle avec des dispositifs fournisseurs de paramètre de déchiffrage (34) alloués et des dispositifs fournisseurs de données déchiffrées (36) alloués, le nombre de dispositifs de traitement (32) étant suffisant pour couvrir la totalité des premières et deuxièmes liaisons (26 ; 28) allouées à au moins une entité de commutation de rattachement (12).

10. Appareil selon l'une quelconque des revendications précédentes,
**caractérisé en ce que** de multiples dispositifs de traitement (32) et un dispositif fournisseur de paramètre de déchiffrage (34), ainsi qu'un dispositif fournisseur de données déchiffrées (36), coopèrent pour une entité de commutation de rattachement (12)

11. Méthode de surveillance de communication dans un réseau radio mobile, dans lequel les données sont transférées sous forme de paquets de données, à chaque abonné au réseau radio mobile (10) étant allouée une entité d'accès radio (20) pouvant échanger par radio des données avec ledit abonné (10), ladite allocation pouvant changer selon le déplacement dudit abonné (10), chaque dite entité d'accès radio (20) étant connectée à une entité de commutation de rattachement (12) par une première liaison (26), chaque dite entité de commutation de rattachement (12) échangeant des données entre de multiples entités d'accès radio qui lui sont allouées ou avec une instance supérieure (18) à laquelle de multiples entités de commutation de rattachement sont allouées, chaque dite entité de commutation de rattachement (12) étant connectée une entité de base de données d'abonnées (14) par une deuxième liaison (28), ladite entité de base de données d'abonnées (14) contenant des données orientées abonnées sur les abonnées radio mobile qui lui sont alloués, lesdites données échangées entre une entité d'accès radio (20) et son entité de commutation de rattachement (12) allouée étant des données chiffrées, au moins un premier et un deuxième paramètre de chiffrage étant utilisés pour chiffrer une première liaison (26), ledit premier paramètre de chiffrage étant fourni par ladite entité de base de données d'abonnées (14) et ledit deuxième paramètre de chiffrage étant obtenu, en particulier récupéré dynamiquement, à partir de l'échange de données entre ladite entité d'accès radio (20) et son entité de commutation de rattachement (12) allouée, **caractérisé par** les étapes suivantes :
a) disposer au moins un dispositif de traitement (32), au moins un dispositif fournisseur de paramètre de déchiffrage (34), ainsi qu'au moins un dispositif fournisseur de données déchiffrées (36) indépendamment les uns des autres en des emplacements aléatoires ;
b) établir une connexion entre de multiples premiers et éventuellement de multiples deuxièmes liaisons (26 ; 28) d'une part et au moins un dispositif de traitement (32) d'autre part ;
c) établir une connexion entre au moins un dispositif de traitement (32) et au moins un dispositif fournisseur de paramètre de déchiffrage (34), ainsi qu'entre au moins un dispositif de traitement (32) et au moins un dispositif fournisseur de données déchiffrées (36) ;
d) récupérer, pour la première liaison (26) respective à déchiffrer les au moins premiers et deuxièmes paramètres de déchiffrage associés d'un dispositif fournisseur de paramètre de déchiffrage (34) alloué ;
e) dans le dispositif de traitement (32) respectif : déchiffrer les paquets de données transférés par la première liaison (26) correspondant au moyen d'au moins lesdits premiers et deuxièmes paramètres de déchiffrage ; et
f) transmettre moins une quantité partielle des données déchiffrées à un dispositif fournisseur de données déchiffrées (36) alloué.

12. Méthode selon la revendication 11,
**caractérisée en ce que** ledit dispositif de traitement (32) commencera par vérifier si un paquet entrant de données est chiffré ou non, où
- s'il est déterminé que ledit paquet de données est non chiffré, ledit paquet de données sera retardé de façon à pouvoir être combiné avec des de donnés actuellement chiffrés après que ceux-ci auront été déchiffrés de façon à obtenir un flux de données ordonnées ;
- s'il est déterminé que ledit paquet de données est chiffré, ledit paquet de données sera soumis à un processus de déchiffrage.

13. Méthode selon les revendications 11 ou 12,
**caractérisée en ce que** les au moins premiers et deuxièmes paramètres respectifs de déchiffrage d'un paquet de données sont demandés en utilisant un paramètre d'allocation qui peut être dérivé dudit paquet de données.

14. Méthode selon l'une quelconque des revendications 11 à 13,
**caractérisée en ce que** chaque dispositif de traitement (32) détermine les au moins premiers paramètres courants de chiffrage des paquets de données reçus de la deuxième liaison (28) connectée et/ou les au moins deuxièmes paramètres courants de chiffrage des paquets de données reçus de la première liaison (26) connectée et les transmet pour stockage en tant que paramètres de chiffrage à un dispositif fournisseur de paramètre de déchiffrage (34) alloué.

15. Méthode selon l'une quelconque des revendications 11 à 14,
**caractérisée en ce que** chaque dispositif de traitement (32) inscrit au moins les premiers et les deuxièmes paramètres de déchiffrage demandés auprès d'un dispositif fournisseur de paramètre de déchiffrage (34) dans une mémoire (44) du dispositif de traitement (32) respectif.

16. Méthode selon la revendication 15,
**caractérisée en ce que** pour déchiffrer des paquets de données, chaque dispositif de traitement (32) vérifiera d'abord si les au moins premiers et les deuxièmes paramètres de déchiffrage requis peuvent être récupérés de sa mémoire (44) et uniquement si ce n'est pas le cas, les demandera auprès d'un dispositif fournisseur de paramètre de déchiffrage (34) alloué.

17. Méthode selon l'une quelconque des revendications 11 à 16,
**caractérisée en ce que** lesdites données sont déchiffrées et transmises en temps réel.
